# EUROPÄISCHE PATENTSCHRIFT

(11) **EP 3 652 081 B1**
(45) Veröffentlichungstag und Bekanntmachung des Hinweises auf die Patenterteilung: **04.08.2021**
(21) Anmeldenummer: 18735501.1
(22) Anmeldetag: 26.06.2018
(51) Int. Cl.: B65B 61/18, B29C 65/78, B65B 43/50, B65B 7/28, B65B 3/02

(54) **VERFAHREN UND VORRICHTUNG ZUM ERGREIFEN UND FESTHALTEN VON EINEN FLANSCH UND EINE SCHRAUBKAPPE AUFWEISENDEN AUSGIESSELEMENTEN ZUR NACHFOLGENDEN APPLIKATION AUF PACKUNGEN**
METHOD AND DEVICE FOR GRIPPING AND HOLDING SPOUTS TO BE SUBSEQUENTLY APPLIED ON CONTAINERS THE SPOUTS HAVING A FLANGE AND A SCREW CAP
PROCÉDÉ ET DISPOSITIF POUR PRENDRE ET TENIR DES BECS VERSEURS COMPRENANTS UN FLANC ET UNE FERMETURE À VIS POUR LES ATTACHER ULTÉRIEUREMENT SUR DES EMBALLAGES

(30) Priorität: 10.07.2017 DE 102017115337
(43) Veröffentlichungstag der Anmeldung: 20.05.2020
(73) Patentinhaber: SIG Technology AG, 8212 Neuhausen am Rheinfall (CH)
(72) Erfinder: BÜHRER Joachim, 79780 Stühlingen (DE); RÜEGG, Martin, 8248 Uhwiesen (CH); WEBER, Daniel, 8207 Schaffhausen (CH)
(74) Vertreter: Cohausz & Florack
(86) Internationale Anmeldenummer: PCT/EP2018/025176
(87) Internationale Veröffentlichungsnummer: WO 2019/011473

(56) Entgegenhaltungen:
- EP-A1- 1 215 124
- EP-A1- 1 471 009
- EP-A1- 2 746 175
- WO-A1-2007/122205
- WO-A1-2011/083322
- US-A- 4 507 168
- US-A- 5 467 527

## Beschreibung

Die Erfindung betrifft ein Verfahren zum Ergreifen und Festhalten von einen Flansch und eine Schraubkappe aufweisenden Ausgießelementen zur nachfolgenden Applikation auf Packungen, insbesondere Karton/Kunststoff-Verbundpackungen für gießfähige Produkte, wobei die Ausgießelemente der Vorrichtung in einer ausgerichteten Lage linear zugeführt werden und wobei jedes Ausgießelement einzeln von Greiferbacken einer Greifeinrichtung ergriffen und mittels seinem Flansch auf eine Packung appliziert wird.

Wenn vorliegend von "Ausgießelementen" die Rede ist, so sollen darunter nicht nur reine Ausgießelemente verstanden werden, sondern auch wiederverschließbare Öffnungselemente aller Art, welche heutzutage meist gleichzeitig als Ausgießelemente dienen. Der Kürze halber wird in dieser Anmeldung jedoch nur von Ausgießelementen gesprochen.

Karton/Kunststoff-Verbundpackungen sind aus der Praxis in unterschiedlichsten Variationen bekannt. Das Verbundmaterial umfasst wenigstens eine Trägerschicht aus Karton und jeweils außen aufgesiegelte Schichten aus Polyethylen, welches den Karton vor Feuchtigkeit schützt. Für aseptische Füllgüter kann das Verbundmaterial zusätzlich eine Aluminiumschicht enthalten um eine gute Barrierewirkung gegen Gase und auch Licht zu erreichen. Das eigentliche Formen und Befüllen der Verpackung und das anschließende Verschließen zu einer Packung geschieht in einer Verpackungsmaschine, die allgemein auch als FFS-Maschine (Form-, Fill-, Seal-Maschine) bezeichnet wird. Die bekannten Packungen werden entweder aus einzelnen Packungsmantelrohlingen (sog. Zuschnitten) hergestellt oder aus einem Packungslaminat von der Rolle mit Produkt befüllt und versiegelt und erst nach der Packungsfertigung vereinzelt.

Häufig werden die gefüllten und verschlossenen Packungen in einem nachfolgenden Schritt mit Packungshilfsmitteln wie beispielsweise wiederverschließbaren Öffnungs- und Ausgießelementen versehen. Dies geschieht mittels separater Applikatoren, denen die fertigen Packungen einzeln zugeführt werden müssen. Die Applikation erfolgt dabei meist auf eine vorbestimmte Schwächungszone auf dem Packungsgiebel, wie beispielsweise ein sog. "überbeschichtetes Loch", welche auf das jeweils zu applizierende Ausgießelement abgestimmt ist.

Die EP 1 471 009 A1 beschreibt ein Verfahren zum Ergreifen und Festhalten von Ausgießelementen zur nachfolgenden Applikation auf Packungen. Aus der gattungsgemäßen EP 1 813 533 A1 sind ein Verfahren und eine Vorrichtung zum Applizieren von Ausgießelementen auf Packungen mit allen Merkmalen des Oberbegriffs von Patentanspruch 1 bzw. Patentanspruch 8 bekannt. Dabei werden linear zugeführte Ausgießelemente zunächst an einzelne Stationen eines Applikators übergeben. Der Applikator übergibt bei der bekannten Vorrichtung mittels einer Mehrzahl von Greifeinrichtungen die Ausgießelemente auf die dazu vorgesehenen Oberflächenabschnitte der Packungen, welche der Vorrichtung gleichfalls auf einem linearen Transportpfad zugeführt werden. Dazu sind Mittel zum koordinierten Bewegen der Greifeinrichtungen vorhanden, um diese zum Aufbringen der Ausgießelemente auf die Packungen in einer vertikalen Ebene zu bewegen. Nach der Applikation der Ausgießelemente werden die Packungen abtransportiert.

Nachteilig an der zuvor beschriebenen Vorrichtung ist es, dass die kopfüber zugeführten Ausgießelemente mittels der Greifeinrichtungen des Applikators seine Lage im Raum um eine horizontale Achse in einer vertikalen Ebene verändern muss. Dazu ist eine nicht unerhebliche Bauhöhe des Applikators notwendig.

Davon ausgehend liegt der vorliegenden Erfindung die Aufgabe zugrunde, das eingangs genannte Verfahren zum Ergreifen und Festhalten von einen Flansch und eine Schraubkappe aufweisenden Ausgießelementen zur nachfolgenden Applikation auf Packungen derart auszugestalten und weiterzubilden, dass ein Applikator mit geringerer Bauhöhe auch Packungen mit Schräggiebel, bei denen also die für die Applikation mit einem Ausgießelement vorgesehenen Oberflächenabschnitte in einer zur horizontalen Ebene geneigten Ebene verlaufen, selbst bei höheren Geschwindigkeiten zuverlässig mit einem Ausgießelement versehen kann.

Diese Aufgabe wird bei einem Verfahren mit den Merkmalen des Oberbegriffs von Anspruch 1 durch die folgenden Schritte gelöst:
- Anheben jeder Greifeinrichtung in eine Startposition oberhalb der zugeführten Ausgießelemente,
- Absenken jeder Greifeinrichtung mit geöffneten Greiferbacken von ihrer höchsten Position auf ein darunter von einem Transportband bereitgestelltes Ausgießelement, wobei die Transportgeschwindigkeit der Greifeinrichtung und des Transportbandes synchronisiert sind,
- Ziehen eines Ausgießelements mit geöffneten Greiferbacken auf einen planen Übergabebereich,
- Ergreifen eines Ausgießelements durch Schließen der Greiferbacken,
- Absenken jeder Greifeinrichtung mit ergriffenem Ausgießelement auf eine darunter transportierte Packung in eine Applizierposition,
- Andrücken des Ausgießelements auf die Packung über eine vorgegebene Zeit und
- Freigeben des applizierten Ausgießelements und Anheben jeder Greifeinrichtung zur Aufnahme eines neu zugeführten Ausgießelements.

Erfindungsgemäß wird eine sehr exakte und damit betriebssichere Übergabe der einzeln zugeführten Ausgießelemente an die Greifeinrichtung erreicht, welche auch bei höheren Maschinengeschwindigkeiten äußerst störungsfrei arbeitet.

Erfindungsgemäß werden die Ausgießelemente mittels eines Transportbandes und seitlichen Führungsschienen einem Übergabebereich zur Aufnahme durch die Greifeinrichtungen zugeführt. Durch die Verwendung eines Transportbandes ist es möglich, die zugeführten Ausgießelemente sehr genau auf die Geschwindigkeit der Greifeinrichtungen zu beschleunigen.

Des Weiteren weist das Transportband erfindungsgemäß eine Mehrzahl von Mitnehmernocken zur Aufnahme der Ausgießelemente auf und entspricht der Abstand zwischen zwei zugeführten Ausgießelementen dem Abstand zwischen zwei Greifeinrichtungen. Da der Abstand zwischen zwei Greifeinrichtungen durch die Bauart des Applikators vorgegeben ist, kann auch die Länge des Transportbandes entsprechend frei gewählt werden, wobei stets ein ganzzahliges Vielfaches dieses Abstandes die Gesamtlänge des Bandes bestimmt.

Unter "Rundläufer" sollen sämtliche Applikatoren verstanden werden, bei denen die Transportbahn der auf dem Applikator transportierten zu applizierenden Ausgießelemente entlang einer Bahn transportiert werden, welche weitestgehend identisch mit der Transportbahn der vom Applikator transportierten Packungen ist. Idealerweise sind darunter also Drehteller zu verstehen, wobei der Begriff Rundläufer jedoch ausdrücklich auch solche Applikatoren umfassen soll, bei denen die Transportbahnen der Ausgießelemente und Packungen von einer runden Form abweichen.

Eine weitere erfindungsgemäße Lehre zeichnet sich dadurch aus, dass die zugeführten Ausgießelemente mittels des Transportbandes auf die Geschwindigkeit der Greifeinrichtungen beschleunigt werden. Auf diese Weise kann stets eine Synchronisation zwischen Drehgeschwindigkeit des Applikators und Bandgeschwindigkeit erfolgen. Zur eigentlichen Übernahme der zugeführten Ausgießelemente ist nach einer weiteren Ausgestaltung der Erfindung vorgesehen, dass beim Absenken jeder Greifeinrichtung die geöffneten Greiferbacken das darunter bereitgestellte Ausgießelement im Bereich seiner Schraubkappe formschlüssig umgreifen. Zweckmäßigerweise wird das Ausgießelement bevorzugt nach dem formschlüssigen Umgreifen der geöffneten Greiferbacken aus seiner Zwangsführung freigegeben und nur noch von den geöffneten Greiferbacken weiter transportiert. Befindet sich ein Ausgießelement auf dem planen Übergabebereich, wird es durch die Greiferbacken aus seiner Zwangsführung freigegeben und im Bereich zwischen der Schraubkappenunterkante und dem Flansch form- und kraftschlüssig ergriffen und von der Greifeinrichtung weiter transportiert.

Eine weitere Lehre der Erfindung sieht vor, dass der Flansch jedes Ausgießelements nach dem Ergreifen von einer Auftragsstation zum Benetzen des Flansches des Ausgießelements mit einem Klebstoff benetzt wird.

Alternativ ist es jedoch auch möglich, dass der Flansch jedes Ausgießelements nach dem Ergreifen von einer Aktivierstation zum Aktivieren des Kontaktbereichs des Flansches des Ausgießelements mittels Wärme, UV-Licht oder dergleichen aktiviert wird.

Jede Greifeinrichtung kann um eine horizontale Achse schwenkbar am Applikator angeordnet sein. Auf diese Weise ist es möglich, die Greifeinrichtung stets in der richtigen Ausrichtung zu der unmittelbar darunter befindlichen Packung in einer vertikalen Ebene zu verschwenken.

Die Greifeinrichtungen können über den Umfang des Applikators gleichmäßig verteilt angeordnet sein. Auf diese Weise ist eine höchstmögliche Anzahl von Greifeinrichtungen auf dem äußeren Umfang des Applikators unterzubringen.

Bevorzugt bewegen sich die Greifeinrichtungen auf einer Kreisbahn und die seitlichen Führungsschienen sind so ausgebildet sind, dass sie vor dem Übergabebereich die Ausgießelemente zunächst zum Applikator hin ablenken, bis diese auf der Kreisbahn mittels der entsprechend verlaufenden seitlichen Führungsschienen bis zum Übergabebereich geführt werden, wo zunächst die seitlichen Führungsschienen und danach auch das Transportband enden, geführt werden. Auf diese Weise wird erreicht, dass der Zeitraum, in dem jedes Ausgießelement und das sich darüber auf die Ausgießelement absenkende Greifeinrichtung exakt übereinander positioniert sind, erhöht wird. Dies ist insbesondere bei höheren Maschinengeschwindigkeiten von erheblicher Wichtigkeit.

Zur eigentlichen Übergabe der Ausgießelemente an die Greifeinrichtungen übergreifen die - noch offenen - Greiferbacken der sich absenkenden Greifeinrichtungen die Ausgießelemente noch im Bereich der gebogenen seitlichen Führungsschienen der Kreisbahn und ziehen diese durch Kontakt der offenen Greiferbacken mit der Schraubkappe der Ausgießelemente in den Übergabebereich, wo die sich schließenden Greiferbacken die jeweiligen Ausgießelemente im Bereich zwischen der Schraubkappenunterkante und dem Flansch form- und kraftschlüssig im Bereich zwischen der Schraubkappenunterkante und dem Flansch ergreifen. Dazu ist es besonders zweckmäßig, wenn der Übergabebereich von einer Gleitfläche gebildet wird, auf der die Ausgießelemente entlang der Kreisbahn bis zur Aufnahme durch die Greiferbacken gleiten. Die Länge der Gleitfläche muss dabei nur so groß ausgeführt sein, bis die Greiferbacken die Schraubkappe fest umschlossen halten.

Es ist auch möglich, dass in Transportrichtung entlang der Kreisbahn hinter der den Übergabebereich bildenden Gleitfläche eine Auftragsstation für Klebstoff auf den Flansch angeordnet ist. Diese kann beispielsweise als Leimwalze ausgebildet sein, so dass die Ausgießelemente dort auch mit der Flanschunterseite nach unten zeigend gleichmäßig mit Klebstoff benetzt werden können. Anstelle einer Auftragsstation kann alternativ auch eine Aktivierstation zur Aktivierung von einem bereits auf dem Flansch vorhandenen Fügemittel oder sogar dem Flanschmaterial selbst vorgesehen sein. Dies kann beispielsweise mittels Wärme, UV-Licht oder dergleichen geschehen.

Bevorzugt sind die Greiferbacken jeder Greifeinrichtung gegeneinander verfahrbar. Dazu weist bevorzugt jede Greifeinrichtung zwei Greiferbacken auf, um den konstruktiven Aufwand und auch die Baugröße der Greifeinrichtung gering zu halten.

Alternativ zur linear verfahrbaren Lösung ist es jedoch auch möglich, dass die Greiferbacken der Greifeinrichtung in weiterer Ausgestaltung der Erfindung gegeneinander verschwenkbar sind.

Als Antrieb für das Öffnen und Schließen der Greiferbacken sind unterschiedliche technische Lösungen denkbar. Besonders bevorzugt werden die Greiferbacken zum Öffnen und Schließen pneumatisch betätigt. Es ist jedoch auch möglich, dass der Antrieb für das Öffnen und Schließen der Greiferbacken hydraulisch oder elektromechanisch erfolgt.

Nachfolgend wird die Erfindung anhand einer lediglich ein bevorzugtes Ausführungsbeispiel darstellenden Zeichnung näher erläutert. In der Zeichnung zeigen
- Fig. 1: eine erfindungsgemäße Vorrichtung zum Durchführen des erfindungsgemäßen Verfahrens in Draufsicht,
- Fig. 2: die Vorrichtung aus Fig. 1 im Vertikalschnitt entlang der Linie II-II in Fig. 1,
- Fig. 3: einen Teil der Vorrichtung mit einer Zuführschiene und einem Transportband für Ausgießelemente und zwei Greifeinrichtungen,
- Fig. 4A: die Greifeinrichtungen und die Zuführschiene aus Fig. 3 in perspektivischer Darstellung,
- Fig. 4B: die Zuführschiene aus Fig. 3 in Draufsicht,
- Fig. 5A und 5B: einen Greifer der Greifeinrichtungen aus Fig. 3 in unterschiedlichen Stellungen in perspektivischer Darstellung,
- Fig. 5C: den Greifer aus Fig. 5A in Draufsicht und
- Fig. 6: eine schematische Darstellung der Bewegungsbahn der Greifeinrichtungen beim Aufnahme- und Appliziervorgang der Ausgießelemente.

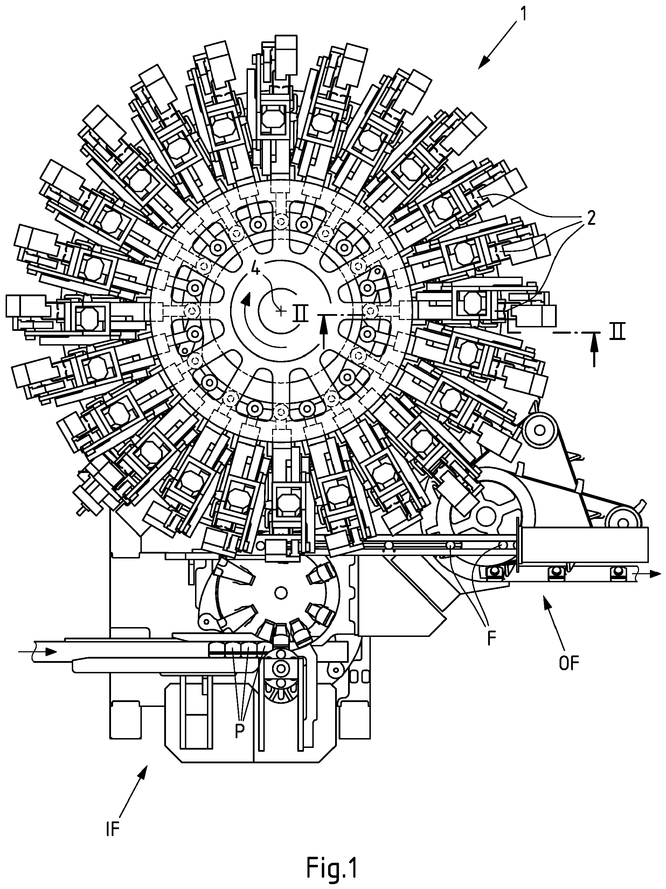

In Fig. 1 ist eine Vorrichtung zum Durchführen des erfindungsgemäßen Verfahrens in Draufsicht dargestellt. Sie besteht im Wesentlichen aus einem Applikator 1 und einer Zuführeinrichtung IF, mit der in Richtung des in der Zeichnung linken Pfeils zugeführte aufrecht stehende gefüllte und versiegelte Packungen P vereinzelt und den einzelnen Positionen in Transporteinheiten 2 des Applikators 1 zugeführt werden. Gleichzeitig werden Ausgießelemente F an den Applikator 1 übergeben, um von diesem auf die Packungen P appliziert zu werden. Nachdem die Ausgießelemente F auf die Packungen P appliziert worden sind, werden die Packungen P in einer Ausschleuseinrichtung OF wieder aus den Transporteinheiten 2 des Applikators 1 entfernt und ihrer weiteren Verwendung zugeführt. Dazu verlassen sie die erfindungsgemäße Vorrichtung in Richtung des Pfeils am rechten Rand der Ausschleuseinrichtung OF. Die Drehrichtung verläuft, vorgegeben durch die Anordnung von Zuführeinrichtung IF und Ausschleuseinrichtung OF der Packungen P, im Ausführungsbeispiel im Uhrzeigersinn, dargestellt von einem mittigen Pfeil in Fig. 1.

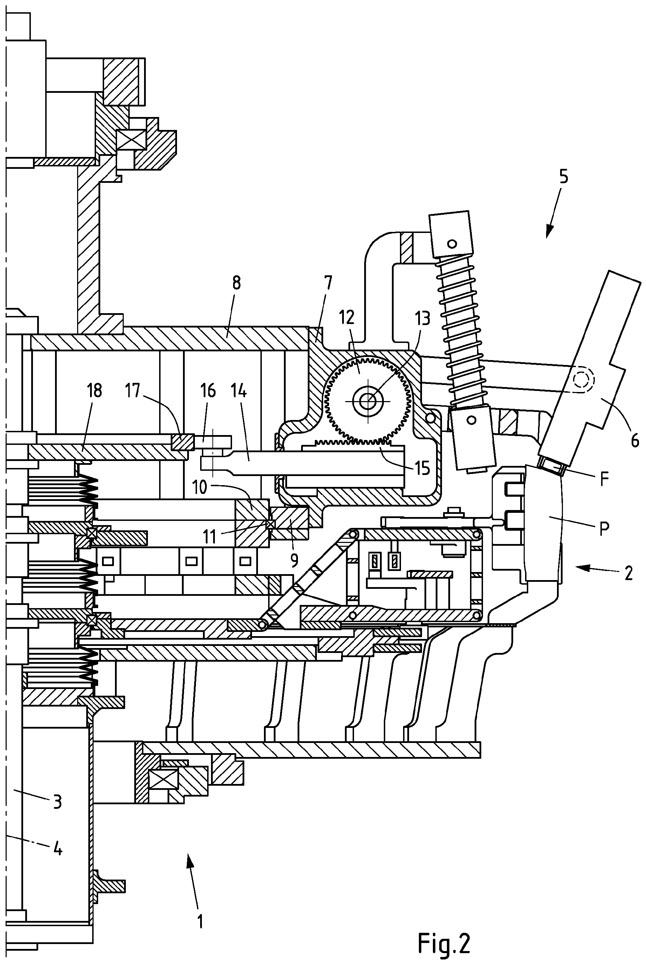

Fig. 2 zeigt die Vorrichtung aus Fig. 1 im Vertikalschnitt entlang der Linie II - II in Fig. 1. Zur besseren Darstellung ist lediglich eine Hälfte des Applikators 1 dargestellt. Man erkennt, dass der Applikator 1 von einer vertikalen Antriebswelle 3 um eine Drehachse 4 angetrieben wird. Der Antrieb des Applikators 1 kann jedoch auch indirekt erfolgen.

Der als Rundläufer ausgebildete Applikator 1 weist in dem in Fig. 1 dargestellten und insofern bevorzugten Ausführungsbeispiel vierundzwanzig Transporteinheiten 2 und entsprechend auch vierundzwanzig Appliziereinheiten 5 auf, welche über den Transporteinheiten 2 angeordnet sind. Jede Appliziereinheit 5 verfügt über eine Greifeinrichtung 6, um jeweils ein zu applizierendes Ausgießelement F aufzunehmen. Die Ausgießelemente F werden von den Greifelementen 6 nach entsprechender Aufbringung eines Fügemittels auf die bezogen auf den Applikator 1 nach außen geneigten Giebelflächen der Packungen P appliziert und dort bis zur Trocknung bzw. Aushärtung angepresst.

Fig. 2 zeigt die Appliziereinheit 5 in ihrer Applizierstellung, in der die Greifeinrichtung 6 das aufgenommene Ausgießelement F auf die Giebelfläche der in der Transporteinheit 2 eingespannten Packung P presst. Erfindungsgemäß ist die Greifeinrichtung 6 mittels eines Viergelenkgetriebes, auf das später noch detailliert eingegangen wird, an der Appliziereinheit 5 angeordnet.

Im dargestellten Ausführungsbeispiel verfügt jede Appliziereinheit 5 über ein Gehäuse 7, welches oben an einer im oberen Bereich des Applikators 1 angeordneten Tragscheibe 8 befestigt ist, wobei die Tragscheibe 8 mit der Antriebswelle 3 des Applikators 1 im dargestellten und insofern bevorzugten Ausführungsbeispiel drehfest verbunden ist. Unten stützt sich das Gehäuse 7 an einem Drehring 9 ab, welcher koaxial um einen Stützring 10 des Applikators 1 angeordnet ist. Der Stützring 10 ist mit einer Verstelleinrichtung zur Justierung der Transporteinheiten 2 verbunden. Wie weiter unten näher erläutert wird, sind sowohl der Drehring 9 als auch der Stützring 10 zweiteilig ausgebildet und umgreifen so ein gemeinsames Lager 11. Auf diese Weise lässt sich die Position der Greifeinrichtung 6 in Umfangsrichtung bezogen auf die Position der darunter befindlichen Transporteinheit 2 in vorgegebenen Grenzen verändern, um das zu applizierende Ausgießelement F optimal auf seinen Aufbringungsort auf dem Packungsgiebel auszurichten.

Im Inneren des Gehäuses 7 erkennt man ein Zahnrad 12, welches um eine horizontal verlaufende Drehachse 13 drehbar ist. Die im unteren Bereich des Zahnrads 12 befindlichen Zähne greifen in die Zähne einer auf einer Steuerstange 14 fest angeordneten Zahnstange 15. Das freie Ende der Steuerstange 14 verfügt über eine drehbar angeordnete Steuerrolle 16, welche an einer Steuerkurve 17 abrollt. Die Steuerkurve 17 ist auf einer - ortsfesten - Tragscheibe 18 des Applikators 1 befestigt. Damit die Steuerrolle 16 stets in festem Kontakt auf der Steuerkurve 17 abrollt, ist die Appliziereinheit 5 durch eine nicht näher bezeichnete Feder, welche über das Zahnrad 12 mittelbar auf die Steuerstange 14 einwirkt, federbelastet ausgeführt.

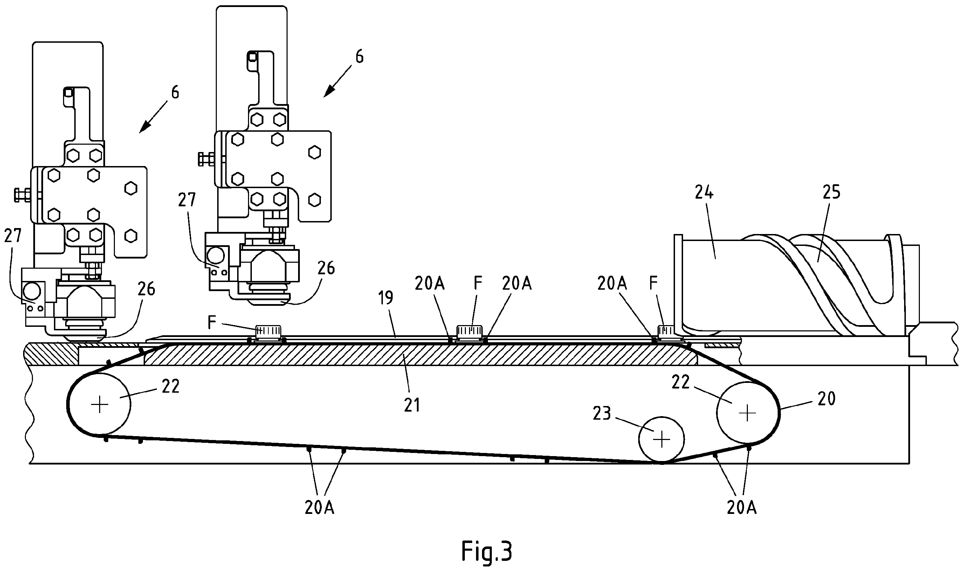

Fig. 3 zeigt einen Vertikalschnitt im Bereich der als Schneckenförderer 24 ausgebildeten Vereinzelungseinrichtung der erfindungsgemäßen Vorrichtung. Man erkennt, dass der zylindrische Aufbau des Schneckenförderers 24 ein eine Mitnehmernut 25 bildendes Schneckengewinde aufweist, so dass jeweils ein Ausgießelement F in der Mitnehmernut 25 transportiert und an der richtigen Stelle auf ein von Führungsschienen 19 seitlich begrenztes Nockenband 20 übergeben werden, welches im entsprechenden Abstand jeweils ein Paar von senkrecht zur Transportrichtung nach außen vorstehenden Nocken 20A aufweist, in denen das Ausgießelement F an den Übergabebereich transportiert wird, wo es an die Greifeinrichtung 6 des Applikators A übergeben wird. Das Nockenband 20 wird im Bereich seines Kontakts mit den Ausgießelementen F über eine Gleitschiene 21 geführt und ist um Umlenkrollen 22 und eine Spannrolle 23 geführt. Jede Greifeinrichtung weist 6 an ihrem unteren Ende im dargestellten und insoweit bevorzugten Ausführungsbeispiel zwei Greiferbacken 26 und ein Antriebsgehäuse 27 auf, die nachfolgend noch näher beschrieben werden.

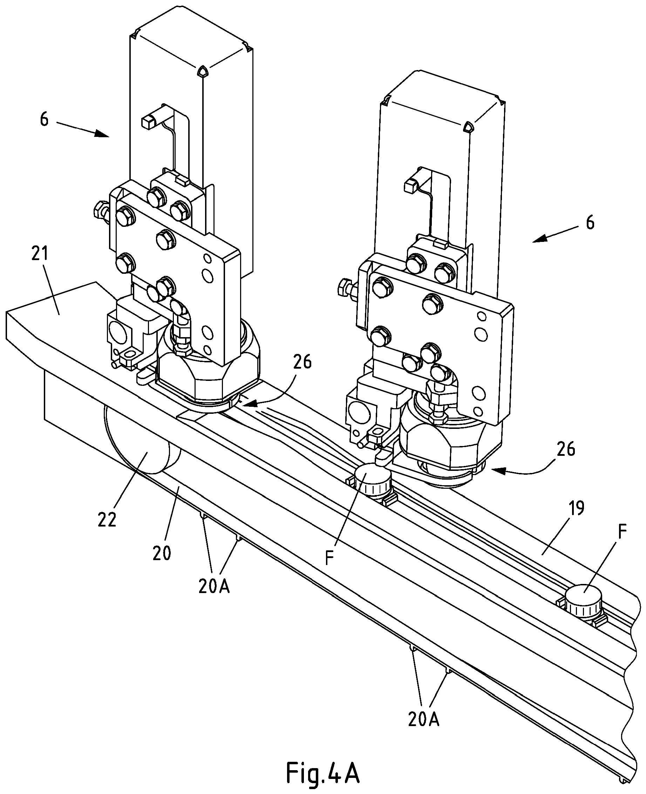

Aus Fig. 4A ist die Übergabe der Ausgießelemente F an die Greifeinrichtungen 6 besonders deutlich zu erkennen. Da die Greifeinrichtungen 6 außen an dem als Rundläufer ausgebildeten (nicht dargestellten) Applikator 1 angeordnet sind, bewegen diese sich auf einer Kreisbahn, während die Ausgießelemente F sich dem Übergabebereich, wie zuvor zur Fig. 3 ausgeführt, linear nähern. Um hier eine besonders zuverlässige Übergabe zu erreichen, ist aus Fig. 4A ersichtlich, dass die seitlichen Führungen 19 kurz vor ihrem Ende die Führungsbahn zum (nicht dargestellten) Applikator hin auslenken bis die Ausgießelemente F exakt auf der Kreisbahn der Greifeinrichtungen 6 angekommen sind und dann von den Führungsschienen 19 bis zu deren Ende genau entlang dieser Kreisbahn geführt werden. Dazu ist der lichte Abstand zwischen zwei Mitnehmernocken 20A etwas größer als der Flansch des Ausgießelements F, so dass dieses sich senkrecht zur Transportrichtung des Nockenbandes 20 im Bereich der ausgelenkten Führungsschiene 19 frei bewegen kann.

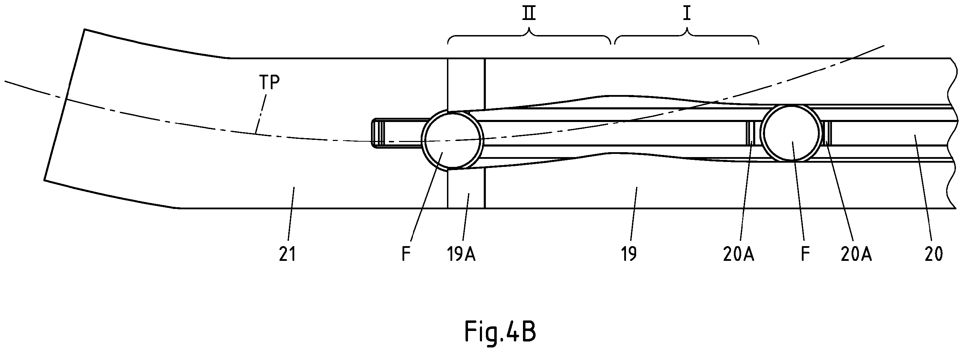

Zur besseren Erläuterung ist der Endbereich der Führungsschienen 19 und der sich anschließende Übergabebereich in Fig. 4B noch einmal als Draufsicht ohne die Greifeinrichtungen dargestellt. Dort ist zunächst die bereits beschriebene Kreisbahn TP der Greifeinrichtungen 6 bezogen auf den Mittelpunkt der Greiferbacken strichpunktiert mit dem Bezugszeichen TP eingezeichnet. Man erkennt darüber hinaus, dass die geraden Führungsschienen 19 in einem ersten Abschnitt I vor dem Übergabebereich eine Auslenkung des Ausgießelementes in Richtung des (nicht dargestellten) Applikators und damit der Kreisbahn TP aufweisen, bis sich der Mittelpunkt des Ausgießelements exakt auf der Kreisbahn TP befindet. Von dort beginnt durch eine entsprechende Ausgestaltung der Führungsschienen 19 der Weitertransport der Ausgießelemente F exakt auf der Kreisbahn TP, wie im Abschnitt II dargestellt. An ihrem Ende sind die Führungsschienen 19 im Bereich 19A angefast und gehen in die Gleitfläche 21 des Übergabebereichs über. Gleichzeitig, wie auch aus Fig. 3 bereits bekannt, taucht das Transportband 20 nach unten ab, so dass hinter dem Abschnitt II der Transport des Ausgießelementes F ausschließlich durch die sich über das Ausgießelement abgesenkte Greifeinrichtung 6 erfolgt. Die Gleitfläche 21 ist dabei so lang ausgeführt, dass ausreichend Zeit zum Schließen der (nicht dargestellten) Greiferbacken der Greifeinrichtung zur Verfügung steht.

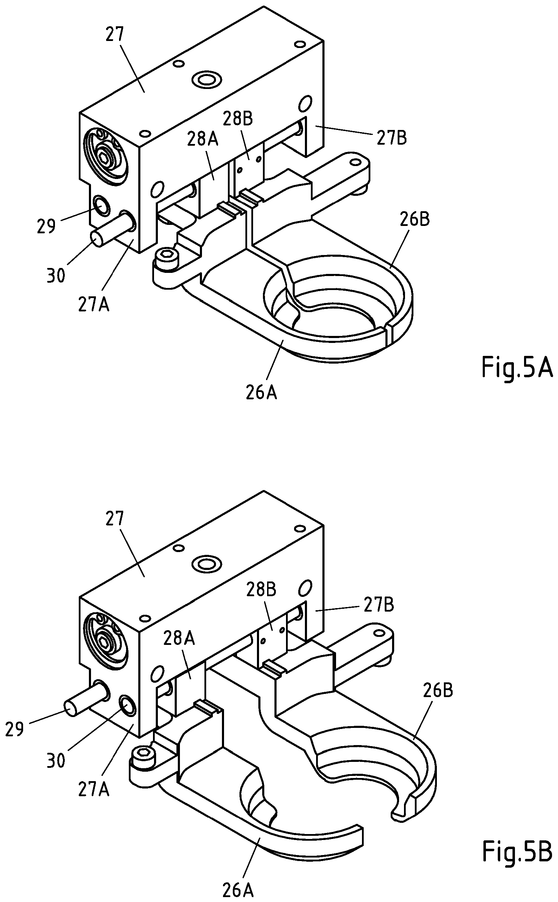

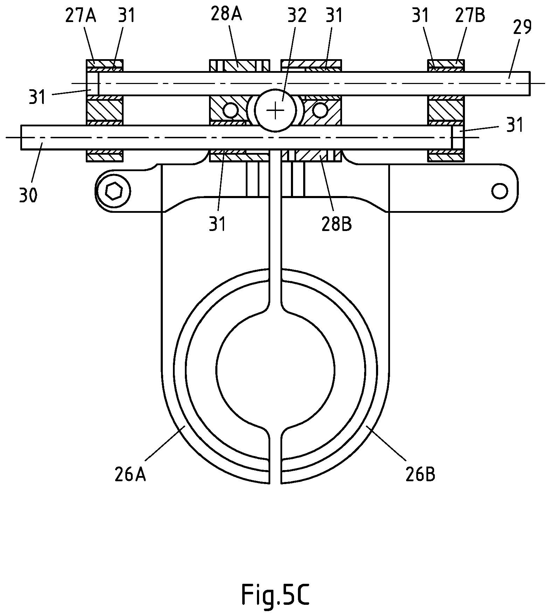

In den Fig. 5A bis 5C ist das Kernstück jeder Greifeinrichtung näher dargestellt. Die Fig. 5A und 5B zeigen die Greiferbacken 26A und 26B in ihrer geschlossenen und geöffneten Stellung. Im dargestellten und insoweit bevorzugten Ausführungsbeispiel sind die Greiferbacken 26A und 26B linear gegeneinander verfahrbar. Dazu weist jede Greifeinrichtung zunächst ein Gehäuse 27 auf, in der die Lagerung der Greiferbacken 26A und 26B untergebracht ist. Dazu weist das Gehäuse 27 an seinen Enden zwei nach unten reichende Schenkel 27A und 27B auf, und es sind am gehäuseseitigen Ende der Greiferbacken 26A ein Lagerblock 28A und an der Greiferbacke 26B ein entsprechender Lagerblock 28B vorgesehen. Der Lagerblock 28A ist dabei fest mit einer Führungsachse 29 und der Lagerblock 28B mit einer Führungsachse 30 verbunden. Die Führungsachse 29 ist zunächst in entsprechenden Lagern 31 in den beiden Schenkeln 27A und 27B des Gehäuses 27 geführt, wie insbesondere der Fig. 5C zu entnehmen ist. Dadurch, dass sich die Führungsachse 29 auch durch den Lagerblock 28B und die Führungsachse 30 auch durch den Lagerblock 28A erstrecken, sind auch diese Lagerblöcke mit entsprechenden Lagern 31 versehen.

Damit nun der Mittelpunkt der Greiferbacken 26A und 26B stets exakt an der richtigen (und für die spätere Applikation optimierten) Stelle der Kreisbahn TP befindet, ist zwischen den beiden Führungsachsen 29 und 30 ein Ritzel 32 vorgesehen. Ferner sind bevorzugt die Führungsachsen 29 und 30 wenigstens auf der zueinander zugewandten Seite jeweils mit einer Zahnstange versehen, so dass die Zähne des Ritzels 32 mit den Zähnen der (nicht dargestellten) Zahnstangen kämmen können und auf diese Weise eine Synchronisation der Öffnungs- und Schließbewegung des Greifers bewirken.

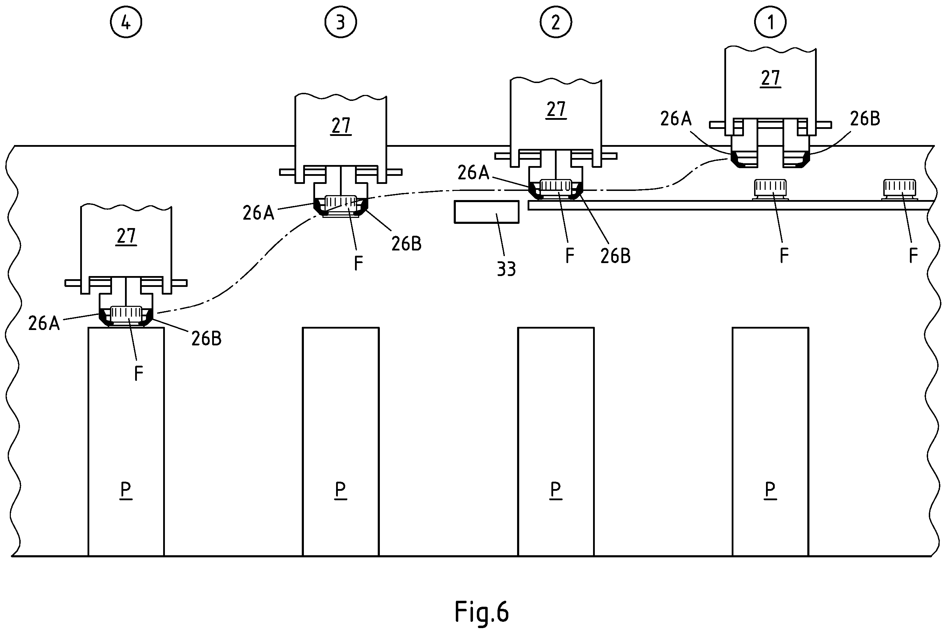

Schließlich zeigt Fig. 6 in schematischer Darstellung die Bewegung der Greifeinrichtung 6 beim Appliziervorgang. In seiner obersten Stellung, Position ①, in welcher die Greiferbacken 26A und 26B geöffnet sind, senkt sie sich zur Aufnahme eines unterhalb der Greifeinrichtung bereitgestellten Ausgießelements F ab und umgreift zunächst die Schraubkappe des Ausgießelements F, um dessen Transport nach der erfolgten Zwangsführung im Übergabebereich zu gewährleisten. Dabei schließen sich die Greiferbacken 26A und 26B und das Ausgießelement F wird in der Nut zwischen Schraubkappe und Flansch form- und kraftschlüssig ergriffen, wie in Position ② dargestellt. Danach bleibt es zunächst in der Höhe des Übergabebereichs und benetzt beim weiteren Transport die Unterseite des Befestigungsflansches des Ausgießelements F mit einem Klebstoff in einer nur angedeuteten Auftragsstation 33. Solche Auftragsstationen sind für sich beispielsweise aus der auf die Anmelderin zurückgehenden DE 100 17 609 A1 bekannt.

Danach beginnt die vertikale Verschwenkung der Greifeinrichtung 6 in Richtung der unterhalb der Greifeinrichtung 6 befindlichen Packung P. Hier ist zunächst eine etwas tiefere Position ③ in einer Zwischenstellung gezeigt. Die Greifeinrichtung 6 wird nun weiter nach unten verschwenkt bis in ihre unterste Stellung, in der das Ausgießelement F auf die Giebelfläche der Packung P appliziert wird, dargestellt als Position ④. Die Greifeinrichtung 6 verbleibt in dieser Applizierstellung im Applikator 1 und presst das Ausgießelement F so lange gegen den Giebel der Packung bis der Klebstoff getrocknet ist. Anschließend gibt sie das Ausgießelement F frei und verfährt wieder in ihre oberste Stellung, Position ①, um - nach einer Umdrehung des Applikators 1 - ein weiteres Ausgießelement F aufzunehmen. Dieser Vorgang wiederholt sich bei einer konstanten Drehbewegung des Applikators 1 für jede angebrachte Greifeinrichtung 6 während des Appliziervorgangs.

Zur besseren Übersicht wurde in der schematischen Darstellung in Fig. 6 auf eine Schrägstellung von Greifeinrichtung 6 und Ausgießelement F sowie des Packungsgiebels der Packungen P verzichtet. Des Weiteren sind zur Vereinfachung die Greiferbacken 26A und 26B um eine vertikale Achse 90° verschwenkt dargestellt, um die zunächst offene und anschließend geschlossene Stellung der Greiferbacken 26A und 26B zeigen zu können.

## Patentansprüche

1. Verfahren zum Ergreifen und Festhalten von einen Flansch und eine Schraubkappe aufweisenden Ausgießelementen (F) zur nachfolgenden Applikation auf Packungen (P), insbesondere Karton/Kunststoff-Verbundpackungen für gießfähige Produkte, wobei die Ausgießelemente (F) der Vorrichtung in einer ausgerichteten Lage linear zugeführt werden und wobei jedes Ausgießelement (F) einzeln von Greiferbacken (26A, 26B) einer Greifeinrichtung (6) ergriffen und mittels seinem Flansch auf eine Packung (P) appliziert wird, umfassend die folgenden Schritte:
- Anheben jeder Greifeinrichtung (6) in eine Startposition oberhalb der zugeführten Ausgießelemente,
- Absenken jeder Greifeinrichtung (6) mit geöffneten Greiferbacken (26A, 26B) von ihrer höchsten Position auf ein darunter bereitgestelltes Ausgießelement (F), wobei die Transportgeschwindigkeit der Greifeinrichtung (6) und die eines Transportbandes (20) synchronisiert sind,
- Ziehen eines Ausgießelements (F) mit geöffneten Greiferbacken (26A, 26B) von dem Transportband (20) auf einen an das Transportband (20) angrenzenden planen Übergabebereich,
- Ergreifen eines Ausgießelements (F) durch Schließen der Greiferbacken (26A, 26B),
- Absenken jeder Greifeinrichtung (6) mit ergriffenem Ausgießelement (F) auf eine darunter transportierte Packung (P) in eine Applizierposition,
- Andrücken des Ausgießelements (F) auf die Packung (P) über eine vorgegebene Zeit und
- Freigeben des applizierten Ausgießelements (F) und Anheben jeder Greifeinrichtung (6) zur Aufnahme eines neu zugeführten Ausgießelements (F).

2. Verfahren nach Anspruch 1,
**dadurch gekennzeichnet, dass**
die zugeführten Ausgießelemente (F) mittels des Transportbandes (20) auf die Geschwindigkeit der Greifeinrichtungen (6) beschleunigt werden.

3. Verfahren nach Anspruch 1 oder 2,
**dadurch gekennzeichnet, dass**
beim Absenken jeder Greifeinrichtung (6) diese bei geöffneten Greiferbacken (26A, 26B) das darunter bereitgestellte Ausgießelement (F) im Bereich seiner Schraubkappe formschlüssig umgreifen.

4. Verfahren nach einem der Ansprüche 1 bis 3,
**dadurch gekennzeichnet, dass**
das Ausgießelement (F) nach dem formschlüssigen Umgreifen aus seiner Zwangsführung durch seitliche Führungsschienen (19) freigegeben wird und nur noch von der Greifeinrichtung (6) weiter gezogen wird.

5. Verfahren nach Anspruch 4,
**dadurch gekennzeichnet, dass**
im Übergabebereich die Greiferbacken (26A, 26B) das aus seiner Zwangsführung freigegebene Ausgießelement (F) im Bereich zwischen der Schraubkappenunterkante und dem Flansch form- und kraftschlüssig ergreifen und weiter transportieren.

6. Verfahren nach einem der Ansprüche 1 bis 5,
**dadurch gekennzeichnet, dass**
der Flansch jedes Ausgießelements (F) nach dem Ergreifen von einer Auftragsstation zum Benetzen des Flansches des Ausgießelements (F) mit einem Klebstoff benetzt wird.

7. Verfahren nach einem der Ansprüche 1 bis 5,
**dadurch gekennzeichnet, dass**
der Flansch jedes Ausgießelements nach dem Ergreifen von einer Aktivierstation zum Aktivieren des Kontaktbereiches des Flansches des Ausgießelements mittels Wärme, UV-Licht od. dgl. aktiviert wird.

## Claims

1. Method for gripping and holding dispensing elements (F), having a flange and a screw cap, for subsequent application onto packages (P), in particular cardboard/plastic composite packages for dispensable products, wherein the dispensing elements (F) are linearly supplied to the apparatus in an aligned position and wherein each dispensing element (F) is gripped individually by gripper jaws (26A, 26B) of a gripping device (6) and is applied by means of its flange onto a package (P)
**characterised by** the following steps:
- Raising each gripping device (6) into a start position above the supplied dispensing elements (F),
- Lowering each gripping device (6) with opened gripper jaws (26A, 26B) from their highest position to a dispensing element (F) provided therebelow, wherein the transport speed of the gripping device (6) and the transport belt (20) are synchronised,
- Pulling a dispensing element (F) with opened gripper jaws (26A, 26B) from the transport belt (20) to a flat delivery region, adjacing to the transport belt (20),
- Gripping a dispensing element (F) by closing the gripper jaws (26A, 26B),
- Lowering each gripping device (6) with gripped dispensing element (F) to a package (P) transported therebelow in an application position,
- Pressing the dispensing element (F) onto the package (P) for a predefined time and
- Releasing the applied dispensing element (F) and raising each gripping device (6) to receive a newly-supplied dispensing element (F).

2. Method according to claim 1,
**characterised in that**
the supplied dispensing elements (F) are accelerated by means of the transport belt (20) to the speed of the gripping devices (6).

3. Method according to claim 1 or 2,
**characterised in that**
when lowering each gripping device (6) these engage the dispensing element (F) provided therebelow, in the case of opened gripper jaws (26A, 26B), in a positive-locking manner in the region of its screw cap.

4. Method according to any one of claims 1 to 3,
**characterised in that**
the dispensing element (F) is released following the positive-locking engagement from its forced guidance by lateral guide rails (19) and pulled further only by the gripping device (6).

5. Method according to claim 4,
**characterised in that**
in the delivery region the gripper jaws (26A, 26B) grip the dispensing element (F) released from its forced guidance in the region between the screw cap lower edge and the flange in a positive-locking and force-fitting manner and transport them further.

6. Method according to any one of claims 1 to 5,
**characterised in that**
the flange of each dispensing element (F) is wetted with an adhesive after gripping by an application station to wet the flange of the dispensing element (F).

7. Method according to any one of claims 1 to 5,
**characterised in that**
the flange of each dispensing element is activated by means of heat, UV light or the like after gripping by an activation station to activate the contact region of the flange of the dispensing element.

## Revendications

1. Procédé de préhension et de maintien d'éléments verseurs (F) comprenant une bride et un couvercle vissé, pour une application suivante sur des emballages (P), plus particulièrement des emballages composites carton/matières plastiques pour des produits pouvant être versés, dans lequel les éléments verseurs (F) sont amenés vers le dispositif de manière linéaire dans une position orientée et dans lequel chaque élément verseur (F) est saisi
individuellement par des mâchoires de préhension (26A, 26B) d'un dispositif de préhension (6) et appliqué au moyen de sa bride sur un emballage (P), comprenant les étapes suivantes :
- soulèvement de chaque dispositif de préhension (6) vers une position de départ au-dessus des éléments verseurs amenés,
- abaissement de chaque dispositif de préhension (6) avec les mâchoires de préhension (26A, 26B) ouvertes de sa position la plus haute vers un élément verseur (F) mis à disposition en dessous, dans lequel la vitesse de transport du dispositif de préhension (6) et celle d'une bande de transport (20) sont synchronisées,
- traction d'un élément verseur (F), avec les mâchoires de préhension (26A, 26B) ouvertes de la bande de transport (20) vers une zone de transfert plane adjacente à la bande de transport (20),
- préhension d'un élément verseur (F) par fermeture des mâchoires de préhension (26A, 26B),
- abaissement de chaque dispositif de préhension (6) avec l'élément verseur (F) saisi, sur un emballage (P) transporté en dessous dans une position d'application,
- compression de l'élément verseur (F) sur l'emballage (P) pendant un temps prédéterminé et
- libération de l'élément verseur (F) appliqué et soulèvement de chaque dispositif de préhension (6) pour la prise en charge d'un nouvel élément verseur (F).

2. Procédé selon la revendication 1,
**caractérisé en ce que**
les éléments verseurs (F) amenés sont accélérés au moyen de la bande de transport (20) à la vitesse des dispositifs de préhension (6).

3. Procédé selon la revendication 1 ou 2,
**caractérisé en ce que**
lors de l'abaissement de chaque dispositif de préhension (6), lorsque les mâchoires de préhension (26A, 26B) sont ouvertes, celui-ci entoure, par complémentarité de forme, l'élément verseur (F) mis à disposition en dessous au niveau de son couvercle vissé.

4. Procédé selon l'une des revendications 1 à 3,
**caractérisé en ce que**
après sa préhension par complémentarité de forme, l'élément verseur (F) est libéré, de son guidage forcé par des rails de guidage latéraux (19) et n'est plus tiré que par le dispositif de préhension (6).

5. Procédé selon la revendication 4,
**caractérisé en ce que**
dans la zone de transfert, les mâchoires de préhension (26A, 26B) saisissent par complémentarité de forme et par force l'élément verseur (F) libéré de son guidage forcé dans la zone entre l'arête inférieure du couvercle vissé et la bride, et le transportent plus loin.

6. Procédé selon l'une des revendications 1 à 5,
**caractérisé en ce que**
la bride de chaque élément verseur (F) est revêtu après la préhension avec une colle par une station d'application pour le revêtement de la bride de l'élément verseur (F).

7. Procédé selon l'une des revendications 1 à 5,
**caractérisé en ce que**
la bride de chaque élément verseur est activée, après la préhension, par une station d'activation pour l'activation de la zone de contact de la bride de l'élément verseur au moyen de chaleur, de lumière UV ou similaire.
